# EUROPÄISCHE PATENTSCHRIFT

(11) **EP 1 817 247 B1**
(45) Veröffentlichungstag und Bekanntmachung des Hinweises auf die Patenterteilung: **28.05.2008**
(21) Anmeldenummer: 05847473.5
(22) Anmeldetag: 30.11.2005
(51) Int. Cl.: B65G 47/84, B65B 43/50

(54) **VERFAHREN UND VORRICHTUNG ZUM BEFÜLLEN VON KONTINUIERLICH IN ZELLENKÄFIGEN TRANSPORTIERTEN BEHÄLTERN UND DAFÜR BESTIMMTER ZELLENKÄFIG**
METHOD AND DEVICE FOR FILLING CONTAINERS CONTINUOUSLY CONVEYED IN CELL CAGES, AND CELL CAGE PROVIDED THEREFOR
PROCEDE ET DISPOSITIF POUR REMPLIR DES RECIPIENTS TRANSPORTES EN CONTINU DANS DES CAGES CELLULAIRES ET CAGE CELLULAIRE APPROPRIEE

(30) Priorität: 04.12.2004 DE 102004058512
(43) Veröffentlichungstag der Anmeldung: 15.08.2007
(73) Patentinhaber: SIG Technology AG, 8212 Neuhausen am Rheinfall (CH)
(72) Erfinder: BALTES, Klaus, 50127 Bergheim (DE)
(74) Vertreter: Thielmann, Andreas
(86) Internationale Anmeldenummer: PCT/EP2005/012755
(87) Internationale Veröffentlichungsnummer: WO 2006/058714

(56) Entgegenhaltungen:
- EP-A- 0 093 409
- EP-A- 1 043 233
- WO-A-20/04110905
- US-A- 3 352 405
- US-A- 4 509 312
- US-A- 5 727 369
- PATENT ABSTRACTS OF JAPAN Bd. 2002, Nr. 07, 3. Juli 2002 (2002-07-03) & JP 2002 087408 A (WADA KATSUHIKO), 27. März 2002 (2002-03-27)

## Beschreibung

Die Erfindung betrifft ein Verfahren und eine Vorrichtung zum Befüllen von kontinuierlich transportierten Behältern, insbesondere Karton/Kunststoff-Verbundpackungen, wobei die Behälter einzeln in von einer Mehrzahl rotierender Transporträder und Übergaberäder transportierten, oben offenen Zellenkäfigen transportiert werden und wobei die Behälteröffnungen nach dem Befüllen bis zum endgültigen Verschließen vorläufig geschlossen werden, wobei die Vorrichtung eine Transporteinrichtung, eine Sterilisiereinheit, eine Fülleinheit und eine Verschließeinheit aufweist sowie einen Zellenkäfig mit einem Zellenkörper zur Aufnahme eines zu befüllenden Behälters zum Transport in der Vorrichtung.

Vorrichtungen zum Befüllen von kontinuierlich transportierten Behältern, beispielsweise Karton/Kunststoff-Verbundpackungen, sind in unterschiedlichsten Ausführungen bekannt. Hierbei werden zunächst intermittierende und kontinuierlich arbeitende Vorrichtungen unterschieden. Bei den intermittierenden Vorrichtungen erfolgt die Packungsfertigung schrittweise auf einem Dornrad, auf dessen einzelnen Stationen aus einem Packungsmantel eine einseitig offene Packung hergestellt wird. Dabei gibt der Takt des Dornrades die Geschwindigkeit der weiteren Schritte beim Füllen und Verschließen der Packungen an und begrenzt diese. Die Geschwindigkeit lässt sich auch nicht beliebig erhöhen, da durch den taktweisen Transport nach dem Füllen der noch offenen Packungen ein Schwappen des Produktes nicht verhindert werden kann. Darüber hinaus erhöht sich auch der mechanische Verschleiß.

Des weiteren sind intermittierend arbeitende Füllvorrichtung nachteilig, weil diese in der Regel als Längsläufermaschinen ausgebildet sind, das heißt, dass die einzelnen Verfahrensschritte hintereinander entlang einer geraden Maschinenlinie erfolgen. Hierbei ist es zwar möglich, diese Maschinen mehrbahnig auszuführen, jedoch erhöht dies die Komplexität der Konstruktion und bedeutet eine schlechte Zugängigkeit der auf den inneren Bahnen angeordneten Werkzeuge. Schließlich ist es bei den Längsläufer-Füllmaschinen nachteilig, dass eine feste Verkoppelung der auf Transportketten geführten Packungen stets einen gesamten Stillstand der Anlage zur Folge hat, wenn auch nur an einer einzigen Stelle ein Fehler aufgetreten ist. Auch hier ist die schnellste Geschwindigkeit immer nur so groß, wie die maximale Geschwindigkeit der am langsamsten arbeitenden Einheit innerhalb der Linie.

Auch sind kontinuierlich arbeitende Füllvorrichtungen bekannt, welche mit Rundläufermaschinen ausgestattet sind, beispielsweise zum Befüllen von Glasflaschen. Die Flaschen werden dazu hintereinander in Einzelreihen transportiert, wobei die mechanische Festigkeit der Flaschen zur Übertragung der benötigten Druckkräfte ausgenutzt werden können. Dieses Verfahren lässt sich auf nicht so stabile Behälter, wie beispielsweise Karton/Kunststoff-Verbundpackungen, nicht übertragen.

Es ist auch bereits vorgeschlagen, die labilen Behälter in sogenannten Zellenkäfigen zu transportieren. So geht aus der EP-A1-1 043 233 ein Verfahren und eine Vorrichtung gemäß dem Oberbegriff der Ansprüche 1 und 3, zum Befüllen von kontinuierlich transportierten Beuteln hervor, wobei die Beutel einzeln in Zellenkäfigen und die Zellenkäfige an sich von einer Mehrzahl von Transport- und Übergaberädern transportiert werden. Eines der Transporträder ist zum Verschließen der Beutel ausgebildet und trägt daher über den Umfang verteilte Einheiten aus jeweils zwei Schweißwerkzeugen und Presselementen, wobei letztere zum Zusammenpressen der Beutel unmittelbar vor dem Verschweißen derselben ausgebildet sind.

Ferner sieht die EP-B1 0 707 550 eine kontinuierlich arbeitende Füllvorrichtung vor, bei denen Karton/Kunststoff-Verbundpackungen in oben offenen Zellenkäfigen angeordnet sind, welche hintereinander an verschiedene in einer Ebene liegende Funktionsräder zum Sterilisieren, Befüllen, Verschließen etc. der einzelnen Packungen übergeben werden. Die Funktionsräder weisen dabei über ihren Umfang verteilt angeordnete Ausnehmungen auf und die Zellenkäfige sind kraftschlüssig mittels Magneten in den Ausnehmungen der Funktionsräder fixiert.

Es ist klar, dass bei beiden Vorrichtungen bei größeren Transportgeschwindigkeiten der Zeitraum zwischen dem Befüllen und dem Verschließen der Behälter besonders kritisch ist, da das abgefüllte Produkt im Behälter hin- und herschwappen kann, was einerseits zu einem Austreten von Produkt oder aber zu einer Benetzung der miteinander zu verschweißenden Kontaktflächen ("Stegnaht") führen kann. Darüber hinaus können durch Luftwirbel und beim Schweißen stets entstehender Packungsstaub Keime in die gefüllten und noch offenen Behälter gelangen.

Das Verschließen von Verbundverpackungen mit oberen Stegnahtlappen an sich ist ebenfalls bereits bekannt. So gehen derartige Verfahren beispielsweise aus der US 4,509,312 und der DE-C2-32 16 173 hervor. Darüber hinaus sind auch Transportkäfige als solche bekannt. Die DE-A-1 586 054 zeigt einen Transportkäfig für Kartons, während die JP-A-2002087408 einen Transportkäfig für Flaschen vorschlägt.

Davon ausgehend liegt der vorliegenden Erfindung die Aufgabe zugrunde, das Verfahren und die Vorrichtung zum Befüllen von kontinuierlich transportierten Behältern und die dazu verwendeten Zellenkäfige so auszugestalten und weiterzubilden, dass die vorerwähnte Schwappproblematik verhindert wird. Darüber hinaus ist erwünscht, dass eine Verkeimung des Behälters nach dem Füllvorgang ausgeschlossen ist.

Hinsichtlich des Verfahrens ist die Aufgabe durch die Markmale des Anspruchs 1 gelöst.

Die erfindungsgemäße Vorrichtung zur Durchführung dieses Verfahrens ist durch die Merkmale des Anspruchs 3 gelöst.

Schließlich ist die Aufgabe auch durch einen dafür geeigneten erfindungsgemäßen Zellenkäfig mit den Merkmalen des Anspruchs 8 gelöst.

Bei Behältern mit einer zum Verschweißen vorgesehenen oberen Stegnaht werden erfindungsgemäß die Kontaktflächen der oberen Stegnaht bis zum endgültigen Verschließen aufeinandergepresst. Auf diese Weise wird ein Schwappen des Produktes bis auf die Stegnaht-Kontaktflächen zuverlässig ausgeschlossen und gleichzeitig das Eindringen von Keimen in die noch nicht endgültig verschlossene Packung verhindert.

In weiterer Ausgestaltung der Erfindung sind die Sterilisiereinheit, Fülleinheit und Verschließeinheit jeweils auf eigenen Transporträdern angeordnet.

Die Einrichtungen zum Zusammenpressen der oberen Stegnaht könnten grundsätzlich nur im Bereich der Fülleinheit und Verschließeinheit vorgesehen sein, wobei die Sterilisiereinheit und auch die zwischen den einzelnen Transporträdern vorgesehenen Übergaberäder mit entsprechenden Einrichtungen ausgestattet sind. Dies schützt auch die bereits sterilisierten Behälter, auch wenn diese zum Befüllen nunmehr geöffnet werden müssen.

Erfindungsgemäß sind die Einrichtungen zum Zusammenpressen der oberen Stegnaht allerdings nicht auf allen vorgenannten einzelnen Rädern, sondern an jedem Zellenkäfig selbst vorgesehen, wobei die Presselemente von einem einzigen Betätigungselement gemeinsam betätigbar sind. Dazu kann das Betätigungselement als Schwenkhebel ausgeführt und mit einem Kulissenstein versehen sein, der mit auf den jeweiligen Transport- bzw. Übergaberädern vorgesehenen Führungsschienen zusammenwirkt. Bei dieser besonders bevorzugten Lösung erfolgt der kinematische Antrieb zum Verschließen der Behälter nach dem Befüllen unter Ausnutzung der Transportbewegung.

Eine weitere Lehre der Erfindung sieht vor, dass Presselement zwei Klemmplatten aufweist, welche durch vom Schwenkhebel betätigten Faltarmen betätigbar sind. Auf diese Weise erfolgt ein stets gleichmäßiges Zusammenfalten der oberen Stegnahtlappen, wobei die Klemmplatten bevorzugt so angeordnet sind, dass Verschließelemente sowie beispielsweise Sonotrode und Amboss einer Ultraschall-Schweißanlage im oberhalb der Klemmplatte hervorstehenden Stegnahtbereich eingreifen können.

Des weiteren ist es zweckmäßig, wenn jeder Zellenkäfig einen oberen und unteren Kragen aufweist, welcher mit entsprechenden Halteelementen in den als Sternräder ausgebildeten Transport- bzw. Übergaberädern zusammenwirkt, um eine schonende Übergabe der Zellenkäfige auf die einzelnen Räder zu gewährleisten.

In weiter bevorzugter Ausführung der Erfindung weist jeder Zellenkörper eines Zellenkäfigs vier Wandbleche und einen Zellenboden auf. Dabei ist bevorzugt der Zellenboden innerhalb des Zellenkörpers höhenverstellbar ausgebildet, um auch - bei gleichem Packungsquerschnitt - verschieden große Packungsformate aufnehmen zu können. Auf diese Weise lassen sich mit der Vorrichtung mit denselben Zellenkäfigen unterschiedliche Formate abfüllen, ohne dass hier ein gesamter Satz der verwendeten Zellenkäfige ausgewechselt werden muss.

Die Erfindung wird nachfolgend anhand einer lediglich ein bevorzugtes Ausführungsbeispiel darstellenden Zeichnung näher erläutert. In der Zeichnung zeigen:
Fig. 1 einen Zellenkäfig mit Klappmechanik, geöffnet in perspektivischer Darstellung und
Fig. 2 den Zellenkäfig aus Fig. 1 mit geschlossener Klappmechanik.

Der dargestellte bevorzugte Zellenkäfig besteht zunächst und im wesentlichen aus einem Zellenkörper 1 mit vier Wandblechen 2 und einem (höhenverstellbaren) Zellenboden 3, so dass eine von oben in den Zellenkäfig eingesetzte Packung P definiert im Zellenkäfig fixiert ist. Ein oberer Kragen 4 und ein unterer Kragen 5, beide vorzugsweise kreisrund, dienen zur Aufnahme in entsprechend vorgesehenen (nicht dargestellten) Aufnahmeplätzen der einzelnen Transport- bzw. Übergaberäder.

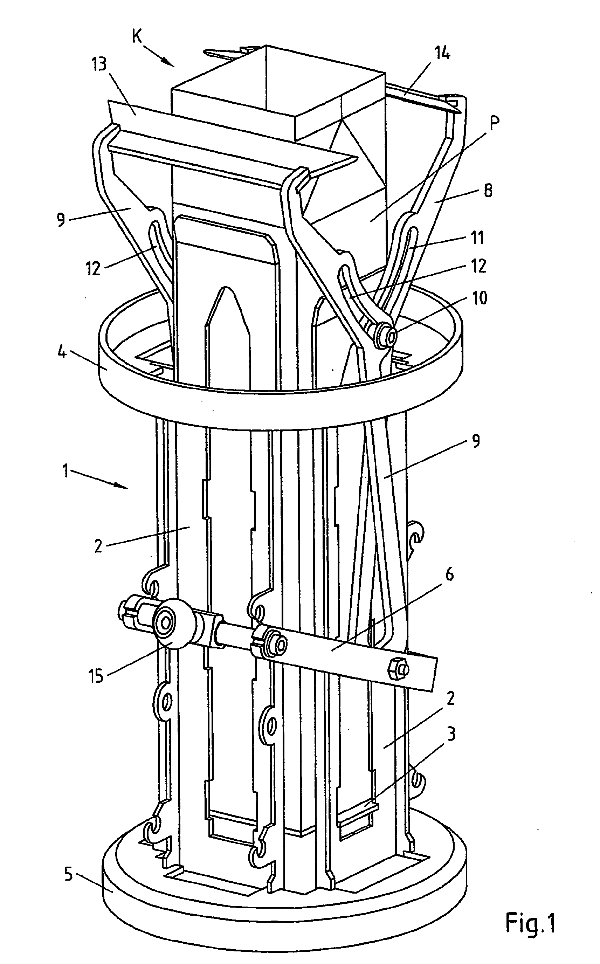

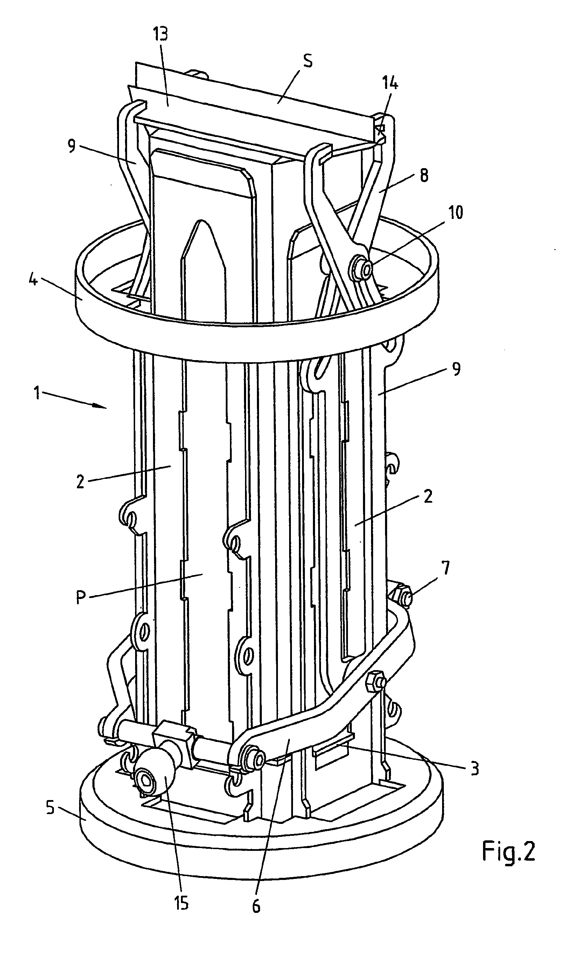

Der Zellenkäfig weist einen Schwenkhebel 6 auf, der um eine am Zellenkörper 1 befestigte Achse 7 von seiner Öffnungsstellung (Fig. 1) in seine Schließstellung (Fig. 2) verschwenkt werden kann.

Über den Schwenkhebel werden seitlich angeordnete Faltarme 8 und 9 derart betätigt, dass mittels geometrischer Ausgestaltung eine Zwangsbewegung um zwei gegenüberliegende Bolzen 10 mittels in den Faltarmen 8 und 9 ausgebildeten Langlöchern 11 und 12 erfolgt. Wie besonders gut in Fig. 1 erkennbar ist, sind an den Enden der Faltarme 9 eine Klemmplatte 13 und an den Enden der Faltarme 8 eine Klemmplatte 14 vorgesehen, welche im Kopfbereich K der Packung P beim Zusammenklappen eine Stegnaht S bilden, welche bevorzugt so hoch frei nach oben absteht, dass die eingesetzten (nicht dargestellten) Verschließelemente die Stegnaht S verschließen können, beispielsweise durch Herstellen einer Ultraschall-Schweißnaht.

Schließlich ist den Fig. 1 und 2 noch zu entnehmen, dass der Schwenkhebel 6 an dem der ortsfesten 7 gegenüberliegenden Ende einen Kulissenstein 15 aufweist, welcher bevorzugt sphärisch gewölbt ausgebildet ist und mit (nicht dargestellten) entlang dem Umfang der einzelnen Transport- bzw. Übergaberäder angesteuert wird. Durch die sphärische Wölbung des Kulissensteins 15 lässt sich eine spielfreie Führung erreichen.

## Patentansprüche

1. Verfahren zum Befüllen von kontinuierlich transportierten Behältern (P), insbesondere Karton/Kunststoff-Verbundpackungen, wobei die Behälter (P) einzeln in von einer Mehrzahl rotierender Transporträder und Übergaberäder transportierten oben offenen Zellenkäfigen transportiert werden und wobei die Behälteröffnungen nach dem Befüllen bis zum endgültigen Verschließen vorläufig geschlossen werden,
**dadurch gekennzeichnet, dass**
Führungsschienen einzelner Transporträder und/oder Übergaberäder ein Betätigungselement (6) an den jeweiligen Zellenkäfigen betätigen und dass die Stegnähte (S) der Behälter (P) durch die Betätigung der Betätigungselemente (6) vorläufig verschlossen werden.

2. Verfahren nach Anspruch 1, wobei die Behälter (P) mit zum Verschweißen vorgesehenen oberen Stegnahtlappen versehen sind,
**dadurch gekennzeichnet, dass**
die Kontaktflächen der oberen Stegnaht (S) bis zum endgültigen Verschließen aufeinandergepresst werden.

3. Vorrichtung zum Befüllen von kontinuierlich transportierten Behältern (P), insbesondere Karton/Kunststoff-Verbundpackungen, mit einer Transporteinrichtung, einer Sterilisiereinheit, einer Fülleinheit und einer Verschließeinheit, wobei die Behälter (P) einzeln in von der Transporteinrichtung transportierten oben offenen Zellenkäfigen transportiert werden und wobei die Transportvorrichtung eine Mehrzahl rotierender Transporträder und Übergaberäder aufweist,
**dadurch gekennzeichnet, dass**
die Zellenkäfige jeweils ein Betätigungselement (6) zum vorläufigen Verschließen der Stegnaht (S) der Behälter (P) aufweisen und dass einzelne Transporträder und/oder Übergaberäder Führungsschienen zum Betätigen des Betätigungselements und vorläufigen Verschließen der Stegnaht (S) der Behälter (P) aufweisen.

4. Vorrichtung nach Anspruch 3,
**dadurch gekennzeichnet, dass**
die Sterilisiereinheit, Fülleinheit und Verschließeinheit jeweils auf eigenen Transporträdern angeordnet sind.

5. Vorrichtung nach Anspruch 4,
**dadurch gekennzeichnet, dass**
die Fülleinheit und die Verschließeinheit Einrichtungen zum Zusammenpressen der oberen Stegnaht (S) aufweisen.

6. Vorrichtung nach Anspruch 4,
**dadurch gekennzeichnet, dass**
die Sterilisiereinheit Einrichtungen zum Zusammenpressen der oberen Stegnaht (S) aufweist.

7. Vorrichtung nach einem der Ansprüche 3 bis 6,
**dadurch gekennzeichnet, dass**
die Übergaberäder Einrichtungen zum Zusammenpressen der oberen Stegnaht aufweisen.

8. Zellenkäfig mit einem Zellenkörper (1) zur Aufnahme eines zu befüllenden Behälters (P), vorgesehen zur Verwendung mit einer Vorrichtung nach einem der Ansprüche 3 bis 7, wobei die Behälter (P) mit zum Verschweißen vorgesehenen oberen Stegnahtlappen versehen sind,
**gekennzeichnet durch**
wenigstens zwei Presselemente (13, 14) zum Zusammenpressen der oberen Stegnahtlappen.

9. Zellenkäfig nach Anspruch 8,
**dadurch gekennzeichnet, dass**
die Presselemente (13, 14) von einem einzigen Betätigungselement (6) gemeinsam betätigbar sind.

10. Zellenkäfig nach Anspruch 9,
**dadurch gekennzeichnet, dass**
das Betätigungselement als Schwenkhebel (6) mit einem Kulissenstein (15) ausgebildet ist, der mit auf den jeweiligen Transport- bzw. Übergaberädern vorgesehenen Führungsschienen zusammenwirkt.

11. Zellenkäfig nach Anspruch 10,
**dadurch gekennzeichnet, dass**
das Presselement zwei Klemmplatten (13, 14) aufweist, welche mittels vom Schwenkhebel (6) betätigten Faltarmen (8, 9) betätigbar sind.

12. Zellenkäfig nach einem der Ansprüche 8 bis 11,
**gekennzeichnet durch**
wenigstens einen mit dem Zellenkörper (1) verbundenen Kragen (4, 5).

13. Zellenkäfig nach Anspruch 12,
**dadurch gekennzeichnet, dass**
der Zellenkäfig einen oberen (4) und einen unteren Kragen (5) aufweist.

14. Zellenkäfig nach einem der Ansprüche 8 bis 13,
**dadurch gekennzeichnet, dass**
der Zellenkörper (1) vier Wandbleche (2) und einen Zellenboden (3) aufweist.

15. Zellenkäfig nach Anspruch 14,
**dadurch gekennzeichnet, dass**
der Zellenboden (3) innerhalb des Zellenkörpers (1) höhenverstellbar ausgebildet ist.

## Claims

1. A method for filling continuously transported containers, especially cardboard/plastic composite packages, wherein the containers are individually transported in cell cages open at the top which are transported by a plurality of rotating transporting wheels and transfer wheels and wherein the container openings are preliminarily closed after the filling until the final closure, **characterised in that** guide rails of individual transport wheels and/or transfer wheels actuate an actuation element at the respective cell cages and that the web seams of the containers are preliminarily closed by actuation of the actuation elements.

2. The method according to claim 1, wherein the containers are provided with web seam lugs provided for sealing,
**characterised in that** the contact surfaces of the upper web seam (S) are pressed onto one another until final closure is achieved.

3. A device for filling continuously transported containers, especially cardboard/plastic composite packages, comprising a transport device, a sterilising unit, a filling unit and a closing unit, wherein the containers are individually transported in cell cages open at the top which are transported by the transporting device and wherein the transporting device comprises a plurality of rotating transporting wheels and transfer wheels,
**characterised in that** the cell cages each have an actuation element for preliminary closure of the web seam of the containers and that individual transport wheels and/or transfer wheels have guide rails for actuation of the actuation element and preliminary closure of the web seam of the containers.

4. The device according to claim 3,
**characterised in that** the sterilising unit, filling unit and closing unit are each arranged on their own transport wheels.

5. The device according to claim 4,
**characterised in that** the filling unit and the closing unit have devices for pressing together the upper web seam (S).

6. The device according to claim 4,
**characterised in that** the sterilising unit has devices for pressing together the upper web seam.

7. The device according to any one of claims 3 to 6,
**characterised in that** the transfer wheels have devices for pressing together the upper web seam.

8. A cell cage comprising a cell body for receiving a container to be filled, provided for use with a device according to one of claims 3 to 7, wherein the containers are provided with upper web seam lugs provided for sealing, **characterised by** at least two pressing elements for pressing together the upper web seam lugs.

9. The cell cage according to claim 8,
**characterised in that** the pressing elements are actuated jointly by a single actuation element.

10. The cell cage according to claim 9,
**characterised in that** the actuation element is constructed as a pivoted lever (6) with a sliding block (15) which cooperates with guide rails provided on the respective transport or transfer wheels.

11. The cell cage according to claim 10,
**characterised in that** the pressing element has two clamping plates (13, 14) which can be actuated by means of folding arms (8, 9) actuated by means of the pivoted lever (6).

12. The cell cage according to any one of claims 8 to 11,
**characterised by** at least one collar (4, 5) connected to the cell body (1).

13. The cell cage according to claim 12,
**characterised in that** the cell cage has an upper (4) and a lower collar (5).

14. The cell cage according to any one of claims 8 to 13,
**characterised in that** the cell body (1) has four wall plates (2) and a cell base (3).

15. The cell cage according to claim 14,
**characterised in that** the cell base (3) is constructed so that it can be adjusted in height inside the cell body (1) .

## Revendications

1. Procédé pour remplir des récipients (P) transportés en continu, en particulier des emballages composites carton/matière plastique, où les récipients (P) sont transportés dans des cages cellulaires ouvertes en haut, transportées par un certain nombre de roues de transport et roues de transfert rotatives et où les ouvertures des récipients sont provisoirement fermées après le remplissage jusqu'à la fermeture définitive, **caractérisé en ce que** les rails de guidage de chaque roue de transport et/ou roue de transfert actionnent un élément d'actionnement (6) sur chaque cage cellulaire et **en ce que** les joints d'arête (S) des récipients (P) sont provisoirement fermés par l'actionnement de l'élément d'actionnement (6).

2. Procédé selon la revendication 1, où les récipients (P) sont munis de languettes de joint d'arête supérieurs, prévus pour la fermeture, **caractérisé en ce que** les surfaces de contact du joint d'arête supérieur (s) sont pressées l'une contre l'autre jusqu'à la fermeture finale.

3. Dispositif pour remplir des récipients (P) transportés en continu, en particulier des emballages composites carton/matière plastique, avec un dispositif de transport, une unité de stérilisation, une unité de remplissage et une unité de fermeture, où les récipients (P) sont transportés seuls dans des cages cellulaires ouvertes en haut, transportées par le dispositif de transport et où le dispositif de transport présente un certain nombre de roues de transport et de roues de transfert rotatives, **caractérisé en ce que** les cages cellulaires présentent chaque fois, un élément d'actionnement (6) pour la fermeture provisoire du joint d'arête (S) du récipient (P) et **en ce que** chaque roue de transport et/ou roue de transfert présente des rails de guidage pour actionner l'élément d'actionnement et la fermeture provisoire du joint d'arête (S) du récipient (P) .

4. Dispositif selon la revendication 3, **caractérisé en ce que** l'unité de stérilisation, l'unité de remplissage et l'unité de fermeture sont agencées chaque fois, sur une roue de transport propre.

5. Dispositif selon la revendication 4, **caractérisé en ce que** l'unité de remplissage et l'unité de fermeture présentent des équipements pour la pression du joint d'arête supérieur (S).

6. Dispositif selon la revendication 4, **caractérisé en ce que** l'unité de stérilisation présente des équipements pour la pression du joint d'arête supérieur (s) .

7. Dispositif selon l'une des revendications 3 à 6, **caractérisé en ce que** les roues de transfert présentent des équipement pour la pression du joint d'arête supérieur.

8. Cage cellulaire avec un corps cellulaire (1) pour la réception de récipients à remplir (P), prévue pour une utilisation dans un dispositif selon une des revendications 3 à 7, où les récipients (P) sont munis de languettes de joint d'arête supérieur prévues pour la fermeture, **caractérisé par** au moins deux éléments de pression (13, 14) pour les pression des languettes du joint d'arête supérieur.

9. Cage cellulaire selon la revendication 8, **caractérisée en ce que** les éléments de pression (13, 14) peuvent être actionnés en commun par un élément d'actionnement unique.

10. Cage cellulaire selon la revendication 9, **caractérisée en ce que** l'élément d'actionnement est formé comme un levier pivotant (6) avec un coulisseau (15), qui agit en commun avec les rails de guidage prévus sur chaque roue de transport et respectivement roue de transfert.

11. Cage cellulaire selon la revendication 10, **caractérisée en ce que** l'élément de pression présente deux plaques de serrage (13, 14), qui peuvent être actionnées à l'aide de bras repliables (8, 9) actionnés par le levier pivotant (6).

12. Cage cellulaire selon l'une des revendications 8 à 11, **caractérisée par** au moins un rebord (4, 5) relié au corps cellulaire (1).

13. Cage cellulaire selon la revendication 12, **caractérisée en ce que** la cage cellulaire présente un rebord supérieur (4) et un rebord inférieur (5).

14. Cage cellulaire selon l'une des revendications 8 à 13, **caractérisée en ce que** le corps cellulaire (1) présente quatre tôles de paroi (2) et un fond de cellule (3).

15. Cage cellulaire selon la revendication 14, **caractérisée en ce que** le fond de cellule (3) est formé de manière à pouvoir être réglé en hauteur à l'intérieur du corps cellulaire (1).
